# EUROPEAN PATENT APPLICATION

(11) **EP 1 942 584 A1**
(43) Date of publication of application: **09.07.2008**
(21) Application number: 07000144.1
(22) Date of filing: 04.01.2007
(51) Int. Cl.: H04B 7/005, H04Q 7/24

(54) **Improved link and power budget adaptation for an enhanced CELL_FACH state**

(71) Applicant: Nokia Siemens Networks GmbH & Co. KG, 81541 München (DE); SIEMENS AKTIENGESELLSCHAFT, 80333 München (DE)
(72) Inventor: Bartl, Michael, 1110 Wien (AT); Breuer, Volker, Dr., 16727 Bötzow (DE); Wimmer, Markus, 50-335 Wroclaw (PL)
(74) Representative: Maier, Daniel Oliver

(57) **Abstract**

Method and cellular mobile telecommunications system component thereof for determining the downlink transmit power by measuring the RACH. This measurements are possible by means of extending the HS-SCH data frame header through the inclusion of a transmit power level indicator. Furthermore, a serving cell quality parameter is measured and when the measurements change from previous measurements, a message indicating such a changed is transmitted in order for the transmission power to be adapted to the new circumstances.

## Description

### Background information:

In the 3GPP standardisation, the Work Item "Enhanced CELL_FACH in FDD" aims to increase the data rates in the CELL_FACH state and to introduce new means to allow fast state transition from any state to CELL_DCH. Note, that state transitions always involve the CELL_FACH state.

Currently, two main proposals are discussion in the 3GPP for an Enhanced CELL_FACH solution - both of which are potential candidates for later endorsements in the standard:
a. Nokia proposal:
   Nokia proposed to use the HS-DSCH for MAC-c PDUs. In other words, the HSDPA feature is used to transmit user data and control information for CELL_FACH users. Details of this proposal can be found in R2-062201. The proposal has several drawbacks, one of them is that no CQI reporting is available at the Node B, so no "direct" link adaptation can be applied.
   In this invention report includes one proposal to overcome this problem.
b. Siemens proposal:
   Siemens proposed to share OVSF code space allocated to S-
   CCPCH and HS-PDSCH. This allows an increased code usage efficiency. Another advantage of the Siemens proposal is its backward compatibility to all legacy UE. Details of this proposal can be found in the
   i. the invention proposal "WCDMA code configuration" from Thomas Chapman and Volker Breuer and
   ii. R2-063201, which also lists the so-far identified pros and cons of both proposals.

In this invention report, we describe two mutually independent inventions to improve the link adaptation:
I1) Improved transmit power level setting for an HSDPA enhanced CELL_FACH state
I2) Improved link level adaptation mechanism for UEs in CELL_FACH (applicable for both the Nokia and Siemens proposal).

### I1) Improved transmit power level setting for an HSDPA enhanced CELL FACH state:

### 1. Problem description:

If the HSDPA feature is applied in the CELL_DCH state, CQI reporting is used for link level adaptation. If HSDPA is used in CELL_FACH as proposed by Nokia in e.g. R2-062201, then HS-DSCH is used for DL transmission of MAC-c PDUs and RACH for uplink transmission.

In CELL_FACH frequent CQI reporting is not possible, as this would cause heavy uplink RACH load. Additionally, one HS-RNTI can be used for multiple CELL_FACH UEs, therefore when the Node B receives a MAC-c PDU from the MAC c/sh/m entity, it is not able to link the PDU with a UE and the required transmit power level.

Therefore, in the current Nokia solution, the transmit power levels of the HS-SCCH and HS-PDSCHs have always been set so that even UEs at cell edge receive the data with the required QoS level. If the transmit power budget is shared by HSDPA CELL_DCH and HSDPA enhanced CELL_FACH users, than a transmission for a CELL_FACH user consumes most of the shared power budget.

### Problem solution and solutions for similar problems, which exist today:

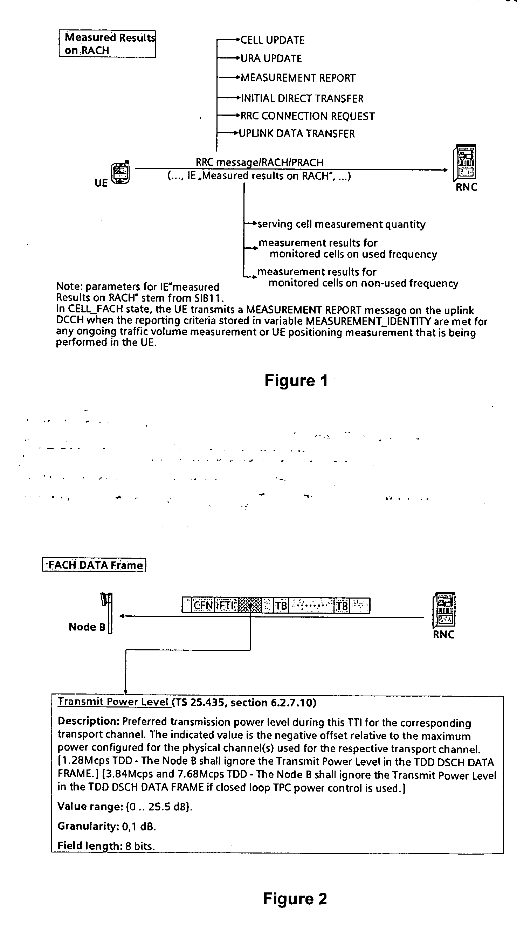

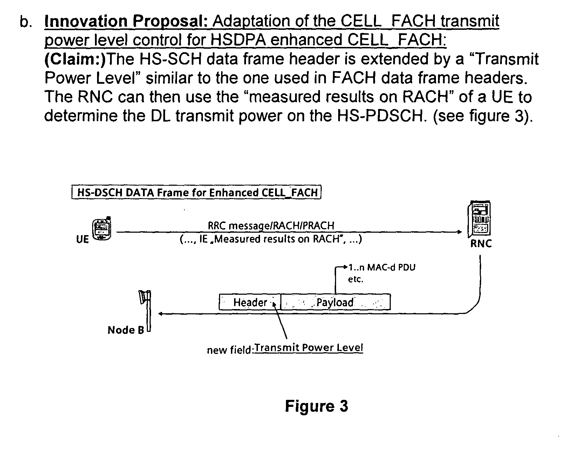

Today, link adaptation is already possible in CELL_FACH, when FACH is used as transport channel. This technical solution, we describe first, then we propose to adapt this solution also for an HSDPA based enhanced CELL_FACH.
a. Existing solution, where FACH is the used transport channel in CELL FACH:
   Measurement results can be transmitted as part of some RRC messages (see Figure 1). The measured results on RACH include e.g. a serving cell measurement quantity, which can be CPICH RSCP, CPICH Ec/No or pathloss (for FDD). The parameters to use for measured results on RACH are set within SIB11.
   So when the RNC receives an RRC message with the IE "Measured Results on RACH", then it has information on the current radio conditions of the UE. 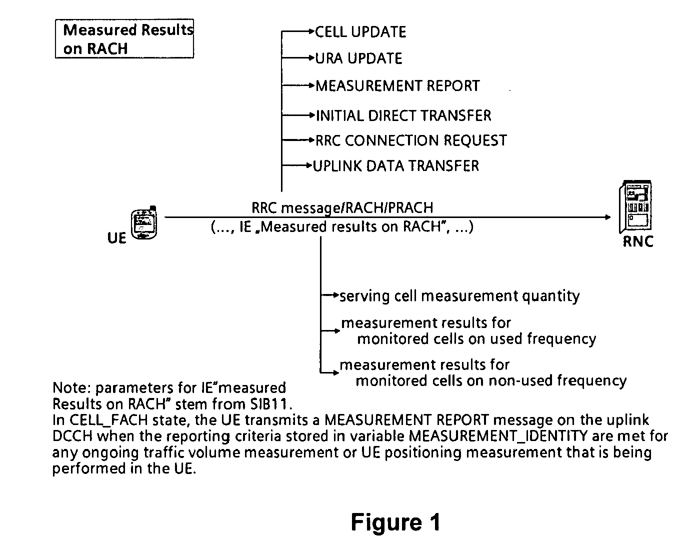 The RNC can exploit the delivered results of the IE "Measured Results on RACH" to set explicitly set a transmit power level on the S-CCPCH, when returning data to this UE (see Figure 2). This allows a kind of "loose inner loop power control" on the S-CCPCH. In other words, the transmit power can be adjusted for UEs in the CELL_FACH state, based on their reported radio conditions. 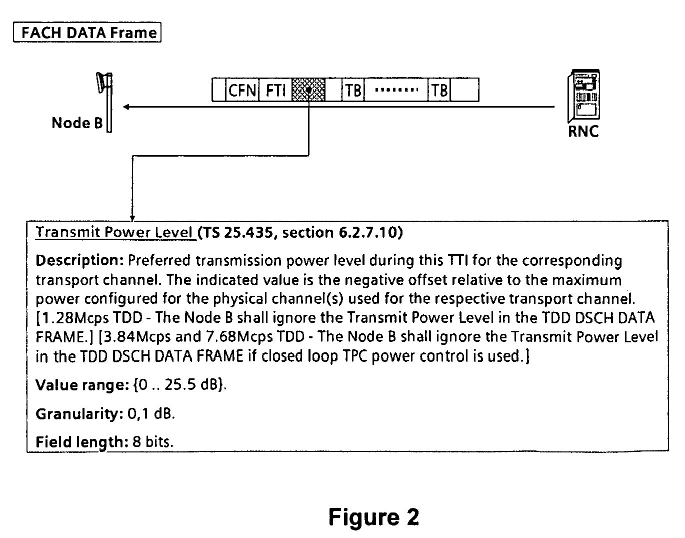
**b.** **Innovation Proposal:** Adaptation of the CELL FACH transmit power level control for HSDPA enhanced CELL FACH:
   **(Claim:)** The HS-SCH data frame header is extended by a "Transmit Power Level" similar to the one used in FACH data frame headers. The RNC can then use the "measured results on RACH" of a UE to determine the DL transmit power on the HS-PDSCH. (see figure 3).

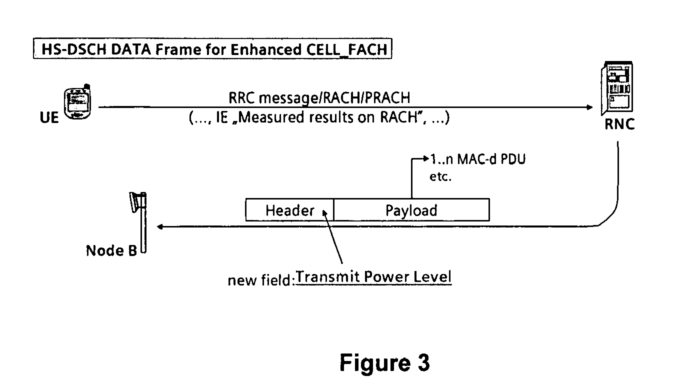

### Advantages:

- link adaptation for an HSDPA enhanced CELL_FACH state
- non-wasted power budget resources, allowing an increased capacity left for users in CELL_DCH
- increased number of UEs in CELL_FACH, which can be served in parallel (current simulation indicate, that otherwhise we may be limited to one CELL_FACH transmission per TTI.)

### I2) Improved link level adaptation mechanism for UEs in CELL FACH

Note: This proposal could be introduced as an optimisation to the existing CELL_FACH state as well as an optimisation for an enhanced CELL_FACH state, independent whether the Nokia or Siemens solution is standardised.

### 1. Problem description:

Measurement results can be transmitted as part of some RRC messages (see figure 1). The measured results on RACH include e.g. a serving cell measurement quantity, which can be CPICH RSCP, CPICH Ec/No or path loss (for FDD). When the RNC receives an RRC message with the IE "Measured Results on RACH", then it has information on the current radio conditions of the UE in the serving cell.
Problem: According to TS 25.331, a transmission of the MEASUREMENT REPORT on RACH in CELL_FACH is only triggered by traffic volume and positioning measurements. It is not triggered by changing radio conditions! If the UE camps for a longer time in CELL_FACH, then the latest "Measured Results on RACH" stored in the RNC for this UE may be out-of-date. In this case the RNC is forced to set the transmit power level for the next downlink transmission as if the UE is camping on the cell edge. In this case, if a low spreading factor is used for the CELL_FACH user (e.g. SF 16 on S-CCPCH), then a large proportion of the DL power budget is blocked by the CELL_FACH transmission. This can be deduced from simulation results, added in section I1.1 of this document.

### 2. Current solutions of this problem:

Non known.

### 3. Problem solution:

**Part 1:** The UE monitors in CELL_FACH the serving cell quality (CPICH RSCP or Ec/No or pathloss.) If the filtered measurements change by n dB from the last value reported to the RNC, and if this condition is fulfilled longer then the period *T₁* (hysteresis), then the UE reports this to the RNC by sending a MEASUREMENT REPORT.
   The parameters *n* and *T₁* could be either fixed in the standard or configurable for operators.
   With this solution, UE specific transmit power level adjustment is possible as long as the UE camps in CELL_FACH state.
   Drawback of this solution:
   If the UE is facing fast changing radio condition, then an excessive reporting on the RACH may occur. This situation is given with fast moving UEs, esp. in bad urban environments. A solution for this is described in part 2:
**Part 2:** if the UE is reporting *k₁* changes of the serving cell quality based on rules described in Part 1 within a period *T₂*, then fast changing radio conditions have been detected. The RNC then sets maximum TRX power on S-CCPCH for this UE, and the UE stops reporting for a period *T₃*. If less or equal *k₂* changes of the serving cell quality based on rules described in Part 1 have been detected for a period *T₄*, then the UE reports again its current serving cell measured quantity - but not before the expiry of *T₃*. This is a trigger then for both UE and Node B, that UE reporting behaviour is as described in Part 1. Note 1: *T₃* and *T₄* could be identical, i.e. *T₃= T₄ = T*.
   Note 2: All or same of the parameters mentioned above can be set by the operator or defined in the standard.

### Advantages:

- radio resource management is improved when a power budged is shared among CELL_FACH and HSDPA. Note: power budged sharing is already part of the UMTS standard.
- link adaptation for CELL_FACH users can be optimised
- prolonged camping in CELL_FACH state becomes possible as the UE is better power controlled.

## Claims

1. Method for a cellular mobile telecommunication system,
wherein the HS-SCH data frame header is extended by a "Transmit Power Level" similar to the one used in FACH data frame headers,
and the RNC can then use the "measured results on RACH" of a UE to determine the DL transmit power on the HS-PDSCH.

2. Method for a cellular mobile telecommunication system,
wherein the UE monitors in CELL_FACH the serving cell quality (CPICH RSCP or Ec/No or pathloss.),
and if the filtered measurements change by n dB from the last value reported to the RNC, and if this condition is fulfilled longer then the period *T₁* (hysteresis), then the UE reports this to the RNC by sending a MEASUREMENT REPORT,
wherein the parameters *n* and *T₁* could be either fixed in the standard or configurable for operators.

3. Method for a cellular mobile telecommunication system according to claim 2,
wherein if the UE is reporting *k₁* changes of the serving cell quality based on rules described in Part 1 within a period *T₂*, then fast changing radio conditions have been detected, the RNC then sets maximum TRX power on S-CCPCH for this UE, and the UE stops reporting for a period *T₃*,
wherein if less or equal *k₂* changes of the serving cell quality based on rules described in claim 2 have been detected for a period *T₄*, then the UE reports again its current serving cell measured quantity - but not before the expiry of *T₃,* which is a trigger then for both UE and Node B, that UE reporting behaviour is as described in claim 2.

4. Cellular mobile telecommunication system component supporting a method according to any of the preceding claims.
